(19) Europäisches Patentamt
European Patent Office
Office européen des brevets

(11) **EP 4 738 694 A1**

(12) **EUROPEAN PATENT APPLICATION**

(43) Date of publication:
**06.05.2026 Bulletin 2026/19**

(21) Application number: **25213487.9**

(22) Date of filing: **04.11.2025**

(51) International Patent Classification (IPC):
**H02P 27/08** (2006.01)    **B60H 1/00** (2006.01)
**F25B 49/02** (2006.01)

(52) Cooperative Patent Classification (CPC):
**H02P 27/085; B60H 1/00428; B60H 1/3232;**
**F25B 49/025;** F25B 2600/021; H02P 2201/09

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **04.11.2024 US 202463715710 P**

(71) Applicant: **Carrier Corporation
Palm Beach Gardens, FL 33418 (US)**

(72) Inventors:
• **SHIN, Jaegue
  Palm Beach Gardens, FL 33418 (US)**
• **AGIRMAN, Ismail
  Palm Beach Gardens, FL 33418 (US)**
• **ARNEDO, Luis
  Palm Beach Gardens, FL 33418 (US)**
• **GINSBERG, David
  Palm Beach Gardens, FL 33418 (US)**
• **LIAO, Xuqiang
  Indianapolis, IN 46231 (US)**

(74) Representative: **Dehns
10 Old Bailey
London EC4M 7NG (GB)**

(54) **OPTIMAL BUS VOLTAGE AND SWITCHING FREQUENCY STRATEGY**

(57)    A transportation refrigeration system (101) is provided and includes a trailer refrigeration unit (TRU) (110), a battery (120) to provide electricity for the TRU (110), an electrical system (140) and a controller (160). The electrical system (140) includes a direct current (DC) bus (141) electrically interposed between the battery (120) and the TRU (110). The electrical system (140) further includes an inverter (142) and a boost converter (143) disposed on the DC bus (141). The controller (160) includes a memory unit (202) storing first, second and third efficiency tables (181, 182, 183) for the TRU (110), the inverter (142) and the boost converter (143), respectively, and a processor (201. The processor (201) sets an operational target for the TRU (110) and achieves the operational target by controlling the inverter (142) and the boost converter (143) according to a voltage of the battery (120), the first, second and third efficiency tables (181, 182, 183) and real-time operating conditions.

FIG. 1

101

## Description

BACKGROUND

The present invention relates to compressor systems and, more particularly, to an optimal direct current (DC) bus voltage and switching frequency strategy for a compressor system.

Refrigerated vehicles transport perishable or temperature-sensitive goods within logistics networks. Refrigerated vehicles typically include a trailer refrigeration unit (TRU) that regulates the environment within a storage area of the vehicle, such as a container or trailer, within which the goods are stored during transit. The TRU includes a refrigeration system or the like, which is powered by an energy source. Traditionally, in the case of a tractor-trailer system where the storage area is within the trailer, the trailer has been provided with an internal combustion engine to power the TRU. The internal combustion engine of the TRU is separate from the internal combustion engine of the tractor providing motive force.

In recent years, electrical power sources have been used to power the TRU, rather than internal combustion engines. Such electrical power sources may include batteries that are charged using electrical energy from an electrical grid and/or a generator coupled to a wheel axle of the trailer. This increases the fuel consumption of the internal combustion engine of the tractor, but permits the use of a smaller battery.

BRIEF DESCRIPTION

According to an aspect of the disclosure, a transportation refrigeration system is provided and includes a trailer refrigeration unit (TRU), a battery to provide electricity for the TRU, an electrical system and a controller. The electrical system includes a direct current (DC) bus electrically interposed between the battery and the TRU. The electrical system further includes an inverter and a boost converter disposed on the DC bus. The controller includes a memory unit storing first, second and third efficiency tables for the TRU, the inverter and the boost converter, respectively, and a processor. The processor sets an operational target for the TRU and achieves the operational target by controlling the inverter and the boost converter according to a voltage of the battery, the first, second and third efficiency tables and real-time operating conditions.

The controller may be distributed between the inverter and the boost converter.

The controller may control the inverter and the boost converter by issuing first and second signals to the inverter and the boost converter, respectively.

The first and second signals may include pulse width modulation (PWM) signals.

The first, second and third efficiency tables may be based on historical data and are updateable.

The operational target may include a compressor speed.

The real-time operating conditions may include at least one or more of ambient temperature and pressure characteristics around the TRU, temperature and pressure characteristics of a container to be conditioned by the TRU, pressure and flow rate characteristics of the TRU and additional electrical characteristics of the electrical system.

The processor may be configured to determine a maximally efficient voltage requirement for the compressor speed and a voltage difference between the voltage of the battery and the voltage requirement, modulate switching frequencies of the boost converter to compensate for the voltage difference with maximum efficiency and modulate switching frequencies of the inverter to build a sinusoidal voltage output from boost converter output with maximum efficiency.

According to an aspect of the disclosure, a transportation refrigeration system is provided and includes trailer refrigeration units (TRUs), loads, a battery to provide electricity for the TRUs and the loads, an electrical system and a controller. The electrical system includes a direct current (DC) bus electrically interposed between the battery and the TRUs and the loads. The electrical system further includes inverters for each TRU and each load and boost converters for some inverters disposed on the DC bus. The controller includes a memory unit storing first, second and third efficiency tables for the TRUs and the loads, the inverters and the boost converters, respectively, and a processor. The processor sets operational targets for the TRUs and the loads and achieves the operational targets by controlling the inverters and the boost converters according to a voltage of the battery the first, second and third efficiency tables and real-time operating conditions.

The first, second and third efficiency tables may be based on historical data and are updateable.

The operational targets for the TRUs may include compressor speeds.

The real-time operating conditions may include at least one or more of ambient temperature and pressure characteristics around the TRUs and the loads, temperature and pressure characteristics of containers to be conditioned by the TRUs and the loads, pressure and flow rate characteristics of the TRUs and the loads and additional electrical characteristics of the electrical system.

The processor may be configured to determine maximally efficient voltage requirements for the compressor speeds and voltage differences between the voltage of the battery and the voltage requirements, modulate switching frequencies of the boost converters to compensate for the voltage differences with maximum efficiency and modulate switching frequencies of the inverters to build sinusoidal voltage outputs from boost converter outputs with maximum efficiency.

According to an aspect of the disclosure, a method of operating a transportation refrigeration system including a trailer refrigeration unit (TRU) and a battery to provide electricity for the TRU is provided. The method includes setting a compressor speed of the TRU for a target temperature of a container, referring to an efficiency table of the TRU to determine a voltage requirement of the compressor speed, determining a voltage difference between a voltage of the battery and the voltage requirement and compensating for the voltage difference to achieve the target temperature by controlling an inverter and a boost converter disposed on a direct current (DC) bus of an electrical system electrically interposed between the battery and the TRU in accordance with efficiency tables of the inverter and the boost converter and real-time operating conditions.

Controlling of the inverter and the boost controller may include issuing pulse width modulation (PWM) signals to the inverter and the boost converter.

The method may further include modulating the PWM signals to the inverter and the boost converter.

Modulating of the PWM signals to the inverter may change a duty cycle of the inverter to build a sinusoidal voltage output from boost converter output.

Modulating of the PWM signals to the boost converter may change a duty cycle of the boost converter to obtain a desired output voltage.

The method may further include generating the efficiency tables of the TRU, the inverter and the boost converter based on historical data and updating the efficiency tables of the TRU, the inverter and the boost converter.

The real-time operating conditions may include at least one or more of ambient temperature and pressure characteristics around the TRU, temperature and pressure characteristics of a container to be conditioned by the TRU, pressure and flow rate characteristics of the TRU and additional electrical characteristics of the electrical system.

Additional features and advantages are realized through the techniques of the present invention. Other embodiments and aspects of the invention are described in detail herein. For a better understanding of the disclosure with the advantages and the features, refer to the description and to the drawings.

BRIEF DESCRIPTION OF THE DRAWINGS

For a more complete understanding of this disclosure, reference is now made to the following brief description, taken in connection with the accompanying drawings and detailed description, wherein like reference numerals represent like parts:

FIG. 1 is a schematic diagram of a transportation refrigeration system with a battery and a TRU;

FIG. 2 is a graphical depiction of an efficiency table for the transportation refrigeration system of FIG. 1;

FIG. 3 is a schematic diagram of a controller of the transportation refrigeration system of FIG. 1;

FIG. 4 is a schematic diagram of a transportation refrigeration system with a battery and multiple TRUs and loads;

FIG. 5 is a schematic diagram of a controller of the transportation refrigeration system of FIG. 4; and

FIG. 6 is a flow diagram illustrating a method of operating a transportation refrigeration system including a TRU and a battery to provide electricity for the TRU.

DETAILED DESCRIPTION

Recently, efforts have been made to electrify truck and trailer products. These efforts involve replacing diesel generators with electric drives to run a TRU motor by electric energy from a battery. A problem with such arrangements, however, is that they tend to be inefficient. The inefficiency can stem from a lack of DC bus voltage and switching frequency management capabilities which, in turn, can lead to energy losses, poor system performance and shortened component lifespans.

Thus, as will be described below, a method is provided for dynamically adjusting a DC bus voltage level and a switching frequency for a compressor system, which includes an electric drive to run a TRU motor by electric energy from a battery, based on real-time operating conditions, load demands and other relevant parameters. By employing advanced algorithms that consider various factors including, but not limited to, temperature, pressure, flow rate and electrical characteristics of the compressor system, the method ensures optimal efficiency across a wide range of operating scenarios by providing for a self-adjusting mechanism that responds to changing conditions without manual intervention, thereby maintaining peak performance while reducing energy consumption.

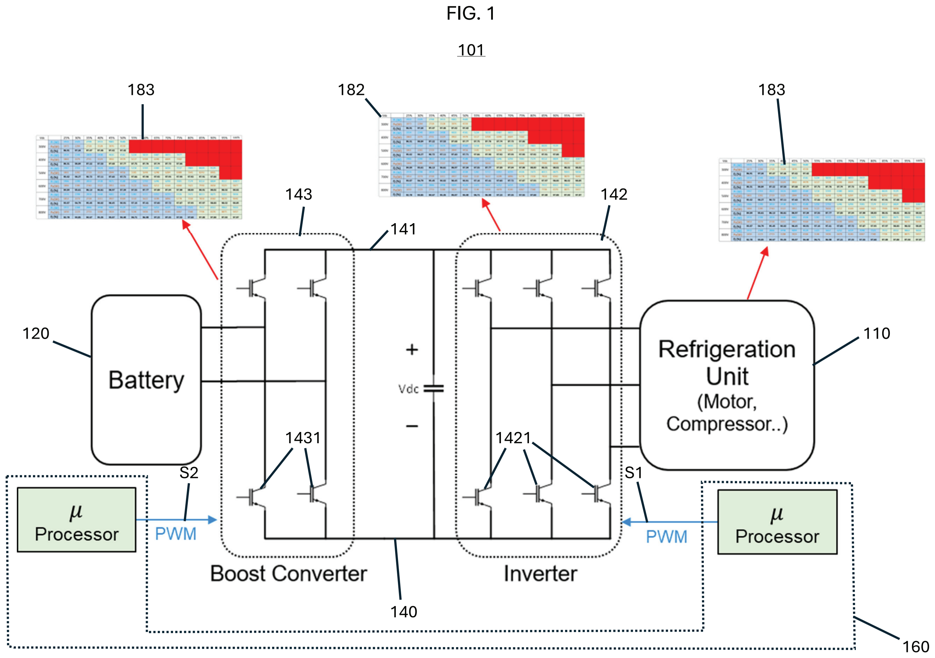

With reference to FIGS. 1-3, a transportation refrigeration system 101 is provided and includes a TRU 110, a battery 120 to provide electricity for the TRU 110, an electrical system 140 and a controller 160. The electrical system 140 includes a DC bus 141 that is electrically interposed between the battery 120 and the TRU 110. The electrical system 140 further includes an inverter 142 and a boost converter 143, which are both disposed on the DC bus 141. The inverter 142 includes a plurality of switches 1421, such as transistor elements. Switching frequencies of the switches 1421 can be affected and controlled as discussed below. The boost converter 143 includes a plurality of switches 1431, such as transistor elements. Switching frequencies of the switches 1431 can be affected and controlled also as discussed below.

It is to be understood that a total efficiency $\eta\_total$ of the transportation refrigeration system 101 is equal to the efficiency of the boost converter 143 $\eta\_boost$ multiplied by the efficiency of the inverter 142 $\eta\_inv$ multiplied by the efficiency of the TRU 110 $\eta\_unit$.

$$\eta_{total} = \eta_{boost} \cdot \eta_{inv} \cdot \eta_{unit}$$

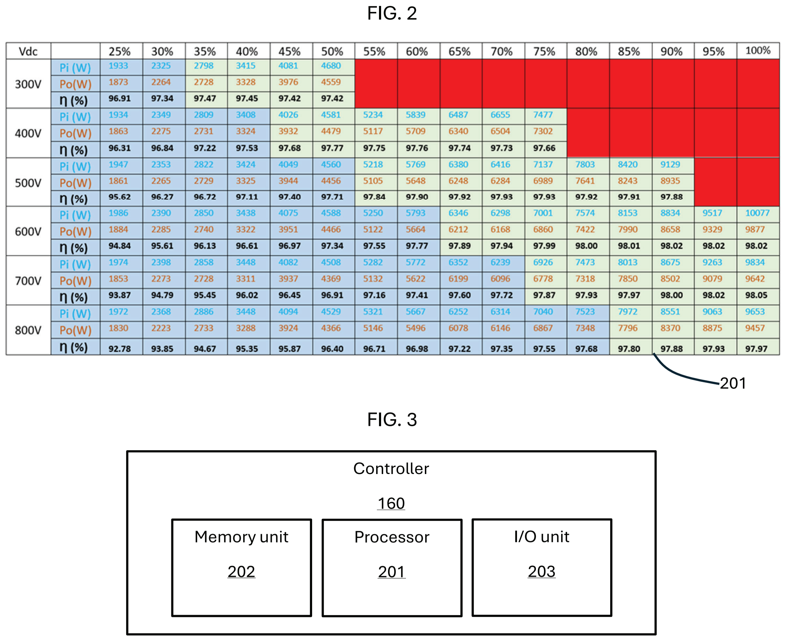

The controller 160 includes a processor 201, a memory unit 202 and an input/output (I/O) unit 203 by which the processor 201 is receptive of voltage information of the battery 120 and real-time operating conditions and by which the processor 201 issues signals to the TRU 110, the inverter 142 and the boost converter 143. The memory unit 202 has executable instructions stored thereon, which are readable and executable by the processor 201, and also has a first efficiency table 181 for the TRU 110, a second efficiency table 182 for the inverter 142 and a third efficiency table 183 for the boost converter 143 (see, e.g., exemplary efficiency table 201 of FIG. 2) stored thereon to be accessed by the processor 201. Each of the first efficiency table 181, the second efficiency table 182 and the third efficiency table 183 can be generated based on historical data and are updateable as new data is received and analyzed.

The first efficiency table 181, the second efficiency table 182 and the third efficiency table 183 can each associate a maximum efficiency with certain combinations of selectable variables. As an example, as shown in FIG. 2, the efficiency table 201 indicates that a maximum efficiency is achieved at a 50% duty cycle for a voltage of 400V and that a maximum efficiency is achieved at a 55% duty cycle for a voltage of 500V.

When the executable instructions are read and executed by the processor 201, the processor 201 is caused to operate generally as described herein. That is, when the executable instructions are read and executed by the processor 201, the processor 201 sets an operational target (i.e., a first selectable variable) for the TRU 110 and achieves the operational target with maximum efficiency by controlling the inverter 142 (i.e., second selectable variables of the inverter 142) and the boost converter 143 (i.e., third selectable variables of the boost converter 143) according to a voltage of the battery 120, according to readouts by the processor 201 of the first, second and third efficiency tables 181, 182 and 183 and according to real-time operating conditions received by the processor 201. In accordance with embodiments, the operational target may be a compressor speed for a compressor motor of the TRU 110 and the real-time operating conditions may include at least one or more of ambient temperature and pressure characteristics around the TRU 110, temperature and pressure characteristics of a container to be conditioned by the TRU 110, pressure and flow rate characteristics of the TRU 110 and additional electrical characteristics of the electrical system 140.

In accordance with embodiments, the processor 201 determines a maximally efficient voltage requirement for the compressor speed and a voltage difference between the voltage of the battery 120 and the voltage requirement, modulates the switching frequencies of the switches 1431 of the boost converter 143 to compensate for the voltage difference with maximum efficiency and modulates switching frequencies of the switches 1421 of the inverter 142 to build a sinusoidal voltage output from an output of the boost converter 143 with maximum efficiency.

The first, second and third efficiency tables 181, 182 and 183 can be modified (i.e., automatically) in accordance with real-time changes of the real-time operating conditions. That is, for the first efficiency table 181 for the TRU 110, there may be a certain compressor speed at a certain voltage of the DC bus 141 which is associated with maximum efficiency of the TRU 110 given certain real-time operating conditions. However, if those real-time operating conditions change, the first efficiency table 181 may dictate that maximum efficiency is achieved at a different compressor speed at the same voltage of the DC bus 141. Similar effects may take place for the second and third efficiency tables 182 and 183 as well.

The controlling of the inverter 142 and the boost converter 143 can be accomplished by the processor 201 issuing signals S1 and S2 to the inverter 142 and the boost converter 143, respectively. In accordance with embodiments, the signals S1 and S2 can be provided as pulse width modulation (PWM) signals that determine the switching frequencies of the switches 1431 of the boost converter 143 and the switching frequencies of the switches 1421 of the inverter 142.

The boost converter 143 effectively controls the bus voltage of the DC bus 141 as its output. In an ideal scenario, the output voltage of the boost converter 143 is Vout - Vin (1-D), where Vout is the voltage output of the boost converter 143, Vin is the voltage of the battery 120 and D is the duty ratio of the signal 2 PWM signal. For example, when D = 0.5 (50%), Vout = Vin / (1-0.5) = 2 * Vin such that Vout is double that of Vin. The processor 201 commands the signal S2 PWM with the duty ratio to get the desired output voltage of the boost converter 143.

With PWM control of the inverter 142, the inverter 142 generates a 3-phase AC output voltage from the voltage of the DC bus 141 (which may or may not be boosted by the boost converter 143). The processor 201 continually changes the PWM duty ratio to build a sinusoidal voltage output by which the speed of the motor of the compressor of the TRU 110 is controlled to achieve a desired compressor speed.

The controller 160 can be at least any one or more of a stand-alone computing device, a remote computing device and/or embodied as computing resources that are distributed between at least the inverter 142 and the boost converter 143 and the battery 120 and the TRU 110.

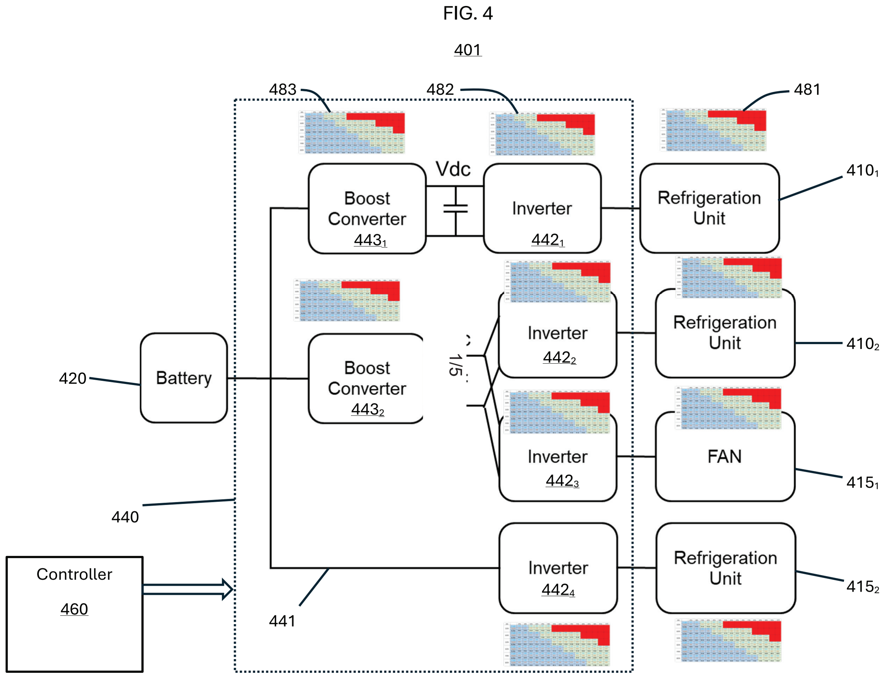

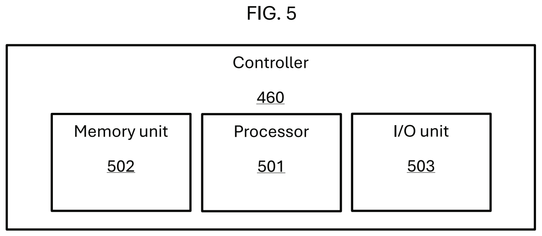

With continued reference to FIGS. 1-3 and with additional reference to FIGS. 4 and 5, a transportation refrigeration system 401 is provided. The transportation refrigeration system 401 is generally similar to the transportation refrigeration system 101 of FIGS. 1-3 and like elements between the two need not be described further. The transportation refrigeration system 401 includes TRUs $410_1$ and $410_2$ and loads $415_1$ and $415_2$, a battery 420 to provide electricity for the TRUs $410_1$ and $410_2$ and the loads $415_1$ and $415_2$, an electrical system 440 and a controller 460. The electrical system 440 includes a DC bus 441, which is electrically interposed between the battery 420 and the TRUs $410_1$ and $410_2$ and the loads $415_1$ and $415_2$ and further includes inverters $442_{1-4}$ for each of the TRUs $410_1$ and $410_2$ and each of the loads $415_1$ and $415_2$ and boost converters $443_1$ and $443_2$ for some inverters $442_{1-4}$ disposed on the DC bus 441.

The controller 460 includes a processor 501, a memory unit 502 and an I/O unit 503 by which the processor 501 is receptive of voltage information of the battery 420 and real-time operating conditions and by which the processor 501 issues signals to the TRUs $410_1$ and $410_2$ and the loads $415_1$ and $415_2$, the inverters $442_{1-4}$ and the boost converters $443_1$ and $443_2$. The memory unit 502 has executable instructions stored thereon, which are readable and executable by the processor 501, and also has first efficiency tables 481 for the TRUs $410_1$ and $410_2$ and the loads $415_1$ and $415_2$, second efficiency tables 482 for the inverters $442_{1-4}$ and third efficiency tables 483 for the boost converters $443_1$ and $443_2$. Each of the first efficiency tables 481, the second efficiency tables 482 and the third efficiency tables 483 can be generated based on historical data and are updateable as new data is received and analyzed.

When the executable instructions are read and executed by the processor 501, the processor 501 is caused to operate generally as described herein. That is, when the executable instructions are read and executed by the processor 501, the processor 501 sets operational targets for the TRUs $410_1$ and $410_2$ and the loads $415_1$ and $415_2$ and achieves the operational targets with maximum efficiency by controlling the inverters $442_{1-4}$ and the boost converters $443_1$ and $443_2$ according to a voltage of the battery 420, according to readouts by the processor 601 of the first, second and third efficiency tables 481, 482 and 483 and according to real-time operating conditions received by the processor 401.

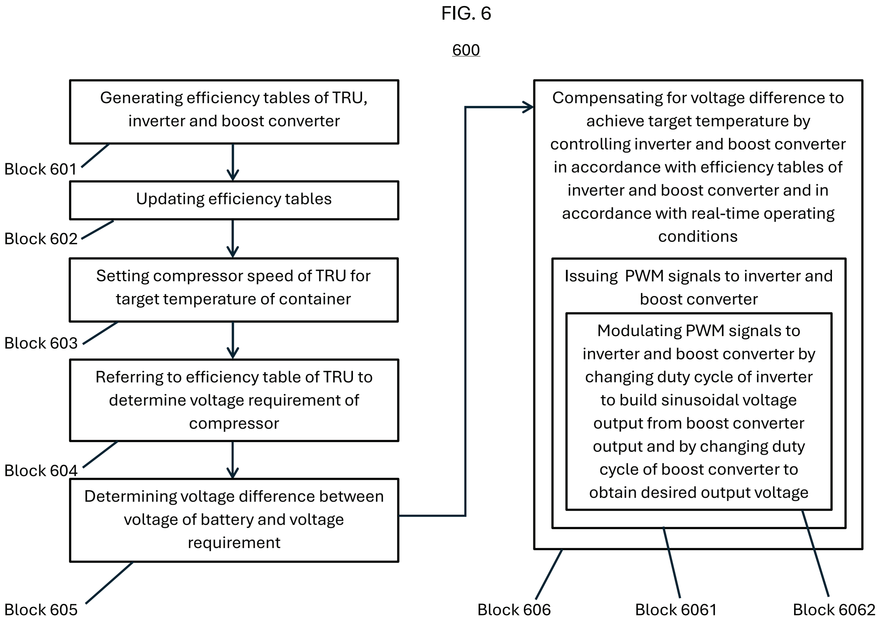

With reference to FIG. 6, a method 600 of operating a transportation refrigeration system including a TRU, a battery to provide electricity for the TRU and an inverter and a boost converter that are disposed on a DC bus of an electrical system electrically interposed between the battery and the TRU, such as the transportation refrigeration system 101 of FIGS. 1-3 and the transportation refrigeration system 401 of FIGS. 4 and 5. The method 600 initially includes generating efficiency tables of the TRU, the inverter and the boost converter based on historical data and (block 601) and updating the efficiency tables of the TRU, the inverter and the boost converter (block 602). The method 600 further includes setting a compressor speed of the TRU for a target temperature of a container (block 603) and referring to the efficiency table of the TRU to determine a voltage requirement of the compressor speed (block 604). The method 600 also includes determining a voltage difference between a voltage of the battery and the voltage requirement (block 605) and compensating for the voltage difference to achieve the target temperature by controlling the inverter and the boost converter in accordance with the efficiency tables of the inverter and the boost converter and in accordance with real-time operating conditions (block 606). The real-time operating conditions can include at least one or more of ambient temperature and pressure characteristics around the TRU, temperature and pressure characteristics of a container to be conditioned by the TRU, pressure and flow rate characteristics of the TRU and additional electrical characteristics of the electrical system. The controlling of the inverter and the boost controller of block 606 can include issuing PWM signals to the inverter and the boost converter (block 6061) and modulating the PWM signals to the inverter and the boost converter by changing a duty cycle of the inverter to build a sinusoidal voltage output from boost converter output and by changing a duty cycle of the boost converter to obtain a desired output voltage (block 6062).

Technical effects and benefits of the present disclosure are the provision of an optimal DC bus voltage and switching frequency strategy for a compressor system, which includes an electric drive to run a TRU motor by electric energy from a battery. The strategy enhances overall efficiencies by intelligently managing a DC bus voltage and a switching frequency of power electronic switches involved in the running of the TRU motor by the electric energy from the battery. The strategy minimizes energy losses, improves system performance and extends the lifespan of components within compressor systems.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application, and to enable others of ordinary skill in the art to understand the disclosure for various embodiments with various modifications as are suited to the particular use contemplated.

While the preferred embodiments to the invention have been described, it will be understood that those skilled in the art, both now and in the future, may make various improvements and enhancements which fall within the scope of the claims which follow. These claims should be construed to maintain the proper protection for the invention first described.

**Claims**

1. A transportation refrigeration system (101), comprising:

   a trailer refrigeration unit, TRU (110);
   a battery (120) to provide electricity for the TRU (110);
   an electrical system (140) comprising a direct current, DC, bus (141) electrically interposed between the battery (120) and the TRU (110) and further comprising an inverter (142) and a boost converter (143) disposed on the DC bus (141); and
   a controller (160) comprising:

   a memory unit (202) storing first, second and third efficiency tables (181, 182, 183) for the TRU (110), the inverter (142) and the boost converter (143), respectively; and
   a processor (201) to set an operational target for the TRU (110) and to achieve the operational target by controlling the inverter (142) and the boost converter (143) according to a voltage of the battery (120), the first, second and third efficiency tables (181, 182, 183) and real-time operating conditions.

2. The transportation refrigeration system (101) according to claim 1, wherein the controller (160) is distributed between the inverter (142) and the boost converter (143).

3. The transportation refrigeration system (101) according to either of claims 1 or 2, wherein the controller (160) controls the inverter (142) and the boost converter (143) by issuing first and second signals to the inverter (142) and the boost converter (143), respectively;
   optionally wherein the first and second signals comprise pulse width modulation, PWM, signals.

4. The transportation refrigeration system (101) according to any of claims 1-3, wherein the first, second and third efficiency tables (181, 182, 183) are based on historical data and are updateable.

5. The transportation refrigeration system (101) according to any of claims 1-4, wherein the operational target comprises a compressor speed.

6. The transportation refrigeration system (101) according to claim 5, wherein the real-time operating conditions comprise at least one or more of ambient temperature and pressure characteristics around the TRU (110), temperature and pressure characteristics of a container to be conditioned by the TRU (110), pressure and flow rate characteristics of the TRU (110) and additional electrical characteristics of the electrical system (140).

7. The transportation refrigeration system according to claim 5 or 6, wherein the processor (201) is configured to:

   determine a maximally efficient voltage requirement for the compressor speed and a voltage difference between the voltage of the battery (120) and the voltage requirement,
   modulate switching frequencies of the boost converter (143) to compensate for the voltage difference with maximum efficiency, and
   modulate switching frequencies of the inverter (142) to build a sinusoidal voltage output from boost converter output with maximum efficiency.

8. A transportation refrigeration system (401), comprising:

   trailer refrigeration units, TRUs (410);
   loads (415);
   a battery (420) to provide electricity for the TRUs (410) and the loads (415);
   an electrical system (440) comprising a direct current, DC, bus (441) electrically interposed between the battery (420) and the TRUs (410) and the loads (415) and further comprising inverters (442) for each TRU (410) and each load (415) and boost converters (443) for some inverters (442) disposed on the DC bus (441); and
   a controller (460) comprising:

   a memory unit (502) storing first, second and third efficiency tables (481, 482, 483) for the TRUs (410) and the loads (415), the inverters (442) and the boost converters (443), respectively; and
   a processor (501) to set operational targets for the TRUs (410) and the loads (415) and to achieve the operational targets by controlling the inverters (442) and the boost converters (443) according to a voltage of the battery (420) the first, second and third efficiency tables (481, 482, 483) and real-time operating conditions.

9. The transportation refrigeration system (401) according to claim 8, wherein the first, second and third efficiency tables (481, 482, 483) are based on historical data and are updateable.

10. The transportation refrigeration system (401) according to either of claims 8 or 9, wherein operational targets for the TRUs (410) comprise compressor speeds;

optionally wherein the real-time operating conditions comprise at least one or more of ambient temperature and pressure characteristics around the TRUs (410) and the loads (415), temperature and pressure characteristics of containers to be conditioned by the TRUs (410) and the loads (415), pressure and flow rate characteristics of the TRUs (410) and the loads (415) and additional electrical characteristics of the electrical system (440).

11. The transportation refrigeration system (401) according to claim 10, wherein the processor (501) is configured to:

determine maximally efficient voltage requirements for the compressor speeds and voltage differences between the voltage of the battery (420) and the voltage requirements,
modulate switching frequencies of the boost converters (443) to compensate for the voltage differences with maximum efficiency, and
modulate switching frequencies of the inverters (442) to build sinusoidal voltage outputs from boost converter outputs with maximum efficiency.

12. A method (600) of operating a transportation refrigeration system (101; 401) comprising a trailer refrigeration unit, TRU (110; 410), and a battery (120; 420) to provide electricity for the TRU (110; 410), the method comprising:

setting a compressor speed of the TRU (110; 410) for a target temperature of a container;
referring to an efficiency table (181; 481) of the TRU (110; 410) to determine a voltage requirement of the compressor speed;
determining a voltage difference between a voltage of the battery (120; 420) and the voltage requirement; and
compensating for the voltage difference to achieve the target temperature by controlling an inverter (142; 442) and a boost converter (143; 443) disposed on a direct current, DC, bus (141; 441) of an electrical system (140; 440) electrically interposed between the battery (120; 420) and the TRU (110; 410) in accordance with efficiency tables (182, 183; 482, 483) of the inverter (142; 442) and the boost converter (143; 443) and real-time operating conditions.

13. The method (600) according to claim 12, wherein the controlling of the inverter (142; 442) and the boost converter (143; 443) comprises issuing pulse width modulation, PWM, signals to the inverter and the boost converter.

14. The method (600) according to claim 13, wherein the method further comprises modulating the PWM signals to the inverter (142; 442) and the boost converter (143; 443);

optionally wherein at least one of:

the modulating of the PWM signals to the inverter changes a duty cycle of the inverter to build a sinusoidal voltage output from boost converter output;
the modulating of the PWM signals to the boost converter changes a duty cycle of the boost converter to obtain a desired output voltage.

15. The method (600) according to any of claims 12-14, wherein the method further comprises generating the efficiency tables (181, 182, 183; 481, 482, 483) of the TRU (110; 410), the inverter (141; 441) and the boost converter (142; 442) based on historical data and updating the efficiency tables of the TRU, the inverter and the boost converter;
and/or
wherein the real-time operating conditions comprise at least one or more of ambient temperature and pressure characteristics around the TRU, temperature and pressure characteristics of a container to be conditioned by the TRU, pressure and flow rate characteristics of the TRU and additional electrical characteristics of the electrical system (140; 440).

FIG. 1

101

## FIG. 2

| Vdc | | 25% | 30% | 35% | 40% | 45% | 50% | 55% | 60% | 65% | 70% | 75% | 80% | 85% | 90% | 95% | 100% |
|---|---|---|---|---|---|---|---|---|---|---|---|---|---|---|---|---|---|
| 300V | Pi (W) | 1933 | 2325 | 2798 | 3415 | 4081 | 4680 | | | | | | | | | | |
| | Po(W) | 1873 | 2264 | 2728 | 3328 | 3976 | 4559 | | | | | | | | | | |
| | η (%) | 96.91 | 97.34 | 97.47 | 97.45 | 97.42 | 97.42 | | | | | | | | | | |
| 400V | Pi (W) | 1934 | 2349 | 2809 | 3408 | 4026 | 4581 | 5234 | 5839 | 6487 | 6655 | 7477 | | | | | |
| | Po(W) | 1863 | 2275 | 2731 | 3324 | 3932 | 4479 | 5117 | 5709 | 6340 | 6504 | 7302 | | | | | |
| | η (%) | 96.31 | 96.84 | 97.22 | 97.53 | 97.68 | 97.77 | 97.75 | 97.76 | 97.74 | 97.73 | 97.66 | | | | | |
| 500V | Pi (W) | 1947 | 2353 | 2822 | 3424 | 4049 | 4560 | 5218 | 5769 | 6380 | 6416 | 7137 | 7803 | 8420 | 9129 | | |
| | Po(W) | 1861 | 2265 | 2729 | 3325 | 3944 | 4456 | 5105 | 5648 | 6248 | 6284 | 6989 | 7641 | 8243 | 8935 | | |
| | η (%) | 95.62 | 96.27 | 96.72 | 97.11 | 97.40 | 97.71 | 97.84 | 97.90 | 97.92 | 97.93 | 97.93 | 97.92 | 97.91 | 97.88 | | |
| 600V | Pi (W) | 1986 | 2390 | 2850 | 3438 | 4075 | 4588 | 5250 | 5793 | 6346 | 6298 | 7001 | 7574 | 8153 | 8834 | 9517 | 10077 |
| | Po(W) | 1884 | 2285 | 2740 | 3322 | 3951 | 4466 | 5122 | 5664 | 6212 | 6168 | 6860 | 7422 | 7990 | 8658 | 9329 | 9877 |
| | η (%) | 94.84 | 95.61 | 96.13 | 96.61 | 96.97 | 97.34 | 97.55 | 97.77 | 97.89 | 97.94 | 97.99 | 98.00 | 98.01 | 98.02 | 98.02 | 98.02 |
| 700V | Pi (W) | 1974 | 2398 | 2858 | 3448 | 4082 | 4508 | 5282 | 5772 | 6352 | 6239 | 6926 | 7473 | 8013 | 8675 | 9263 | 9834 |
| | Po(W) | 1853 | 2273 | 2728 | 3311 | 3937 | 4369 | 5132 | 5622 | 6199 | 6096 | 6778 | 7318 | 7850 | 8502 | 9079 | 9642 |
| | η (%) | 93.87 | 94.79 | 95.45 | 96.02 | 96.45 | 96.91 | 97.16 | 97.41 | 97.60 | 97.72 | 97.87 | 97.93 | 97.97 | 98.00 | 98.02 | 98.05 |
| 800V | Pi (W) | 1972 | 2368 | 2886 | 3448 | 4094 | 4529 | 5321 | 5667 | 6252 | 6314 | 7040 | 7523 | 7972 | 8551 | 9063 | 9653 |
| | Po(W) | 1830 | 2223 | 2733 | 3288 | 3924 | 4366 | 5146 | 5496 | 6078 | 6146 | 6867 | 7348 | 7796 | 8370 | 8875 | 9457 |
| | η (%) | 92.78 | 93.85 | 94.67 | 95.35 | 95.87 | 96.40 | 96.71 | 96.98 | 97.22 | 97.35 | 97.55 | 97.68 | 97.80 | 97.88 | 97.93 | 97.97 |

201

## FIG. 3

| Controller |
|---|
| 160 |

| Memory unit | Processor | I/O unit |
|---|---|---|
| 202 | 201 | 203 |

EP 4 738 694 A1

FIG. 4

401

Controller 460 → 440

Battery 420

Boost Converter 443₁ — Vdc — Inverter 442₁ — Refrigeration Unit 410₁

Boost Converter 443₂

Inverter 442₂ — Refrigeration Unit 410₂

1/5 ... Inverter 442₃ — FAN 415₁

Inverter 442₄ — Refrigeration Unit 415₂

441

483  482  481

FIG. 5

Controller

460

| Memory unit | Processor | I/O unit |
|:---:|:---:|:---:|
| 502 | 501 | 503 |

FIG. 6

600

| Generating efficiency tables of TRU, inverter and boost converter |
Block 601

↓

| Updating efficiency tables |
Block 602

↓

| Setting compressor speed of TRU for target temperature of container |
Block 603

↓

| Referring to efficiency table of TRU to determine voltage requirement of compressor |
Block 604

↓

| Determining voltage difference between voltage of battery and voltage requirement |
Block 605

Compensating for voltage difference to achieve target temperature by controlling inverter and boost converter in accordance with efficiency tables of inverter and boost converter and in accordance with real-time operating conditions

Issuing PWM signals to inverter and boost converter

Modulating PWM signals to inverter and boost converter by changing duty cycle of inverter to build sinusoidal voltage output from boost converter output and by changing duty cycle of boost converter to obtain desired output voltage

Block 606    Block 6061    Block 6062

EP 4 738 694 A1

Europäisches
Patentamt
European
Patent Office
Office européen
des brevets

# EUROPEAN SEARCH REPORT

**Application Number**

EP 25 21 3487

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/271476 A1 (SHE XU [US] ET AL) 31 August 2023 (2023-08-31) | 1-3,5-7, 12 | INV. H02P27/08 |
| A | * paragraphs [0064], [0086]; claims 1,5,9; figure 4 * | 4,9,15 | B60H1/00 F25B49/02 |
| | ----- | | |
| Y | US 2018/034403 A1 (KIM JIN-HAN [KR] ET AL) 1 February 2018 (2018-02-01) * paragraphs [0077], [0105], [0167] * | 1-3,5-8, 10-14 | |
| | ----- | | |
| Y | EP 4 425 731 A1 (THERMO KING LLC [US]) 4 September 2024 (2024-09-04) | 8,10,11, 13,14 | |
| A | * paragraphs [0030], [0056], [0057], [0078]; figure 3 * | 4,9,15 | |
| | ----- | | |

**TECHNICAL FIELDS
SEARCHED (IPC)**

H02P
B60H
F25B

The present search report has been drawn up for all claims

| Place of search | Date of completion of the search | Examiner |
|---|---|---|
| Munich | 18 March 2026 | Schneider, Gernot |

EPO FORM 1503 03.82 (P04C01)

## ANNEX TO THE EUROPEAN SEARCH REPORT
## ON EUROPEAN PATENT APPLICATION NO.

EP 25 21 3487

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2026

| Patent document cited in search report | | Publication date | Patent family member(s) | | Publication date |
|---|---|---|---|---|---|
| US 2023271476 | A1 | 31-08-2023 | CN | 116653821 A | 29-08-2023 |
| | | | EP | 4234289 A2 | 30-08-2023 |
| | | | US | 2023271476 A1 | 31-08-2023 |
| US 2018034403 | A1 | 01-02-2018 | CN | 107210700 A | 26-09-2017 |
| | | | EP | 3229368 A1 | 11-10-2017 |
| | | | KR | 20160065618 A | 09-06-2016 |
| | | | US | 2018034403 A1 | 01-02-2018 |
| | | | WO | 2016089032 A1 | 09-06-2016 |
| EP 4425731 | A1 | 04-09-2024 | CN | 118589948 A | 03-09-2024 |
| | | | EP | 4425731 A1 | 04-09-2024 |
| | | | US | 2024297502 A1 | 05-09-2024 |

EPO FORM P0459

For more details about this annex : see Official Journal of the European Patent Office, No. 12/82